# EUROPEAN PATENT APPLICATION

(11) **EP 2 180 398 A1**
(43) Date of publication of application: **28.04.2010**
(21) Application number: 08792354.6
(22) Date of filing: 04.08.2008
(51) Int. Cl.: G06F 3/041, G06F 3/048, H04M 1/247

(54) **CONTACT TYPE INPUT DEVICE, CONTACT TYPE INPUT METHOD, AND PROGRAM**

(30) Priority: 13.08.2007 JP 2007210842
(71) Applicant: Nec Corporation, Tokyo 108-8001 (JP)
(72) Inventor: TETSUHASHI, Hideaki, Tokyo 108-8001 (JP)
(74) Representative: Betten & Resch
(86) International application number: PCT/JP2008/064370
(87) International publication number: WO 2009/022671

(57) **Abstract**

A touch panel input device and a touch panel input method, which can easily enlarge a display screen without using a stylus pen, for a contact type input device 1 for performing an input operation by contacting a display screen 2, is provided. Input reception means 4 for receiving a contact operation to the display screen 2 and acquires a contact position, and enlarge display means 6 for enlarging and displaying a display image on the display screen 2 according to the contact position, are included.

## Description

### TECHNICAL FIELD

The present invention relates to a contact type input device and a contact type input method, and specifically relates to a contact type input device, a contact type input method and program to assist an input operation to an information processing terminal by a user.

### BACKGROUND ART

In recent years, an information processing device equipped with a contact type input device, in such a terminal for guiding a direction for a car or a terminal for performing a banking operation, is becoming popular.

For such a contact type input device, a user performs a contact operation on a part of a touch panel, to select a corresponding processing item, or to input character information or image information. As a result, desired information processing is executed.

In addition, according to the recent advances in technology, portable information processing terminals, gaming machines and the like have become widespread. To such an information processing terminal or a gaming machine, the contact type input device is applied.

With the portable terminal, a gaming machines or the like equipped with the contact type input device having become widespread, a function in a mobile terminal for browsing WWW(world wide web) site has become popular. On browsing a WWW site, a stylus pen suitable for a delicate operation is used.

Even when such a stylus pen is used, for a terminal having a contact type display that requires the user to do an input operation, a delicate operation on the display is necessary. Therefore, an improper operation has been likely to occur.

A related art of a contact type input device is described in patent document 1.

Paten document 1: Japanese Patent Application Laid-Open No. 2006-5655.

### DISCLOSURE OF THE INVENTION

However, in the contact type input device described in patent document 1, in the case of inputting using one's finger on a touch panel, an area on the touch panel contacted by the finger is large. It is difficult to distinguish adjacent icons and to have the finger touch only a desired icon. Therefore, a wrong icon near the desired icon has been likely to be selected.

In particular, when a full browser screen is displayed on a small screen of a portable terminal, such as a mobile telephone, display operations such as enlarging or reducing the browser need to be quickly performed. Furthermore, selecting operation for closely-spaced icons has been needed. Therefore, the stylus pen has been indispensable.

Even when using such a stylus pen, wrong icons were often selected, and operability has not been particularly good.

On a small screen of a portable terminal such as a PDA (personal digital assistant), a mobile telephone or the like, different from a personal computer, it is difficult to check a wide range of a browser. When a character size in the browser is enlarged, so as to make the character more visible, this is more true.

For this reason, there has been a problem that a desired icon or the like cannot be quickly reached.

Moreover, for the troublesome processing for changing a character size displayed in the browser or the like, the user has been required to be accustomed to the operation with the stylus pen.

The invention has been accomplished in view of the above circumstances and aims at providing a contact type input device, contact type input method and program, for the contact type input device, which can easily enlarge the display unit without using the stylus pen.

A contact type input device according to the present invention is the contact type input device performing an input operation by contacting display means, characterized by including: input reception means for receiving a contact operation to the display means and for acquiring a contact position; and enlarge display means for enlarging and displaying a display image on the display means based on the contact position.

A contact type input method according to the present invention is the contact type input method performing an input operation by contacting a display unit, characterized by including receiving a contact operation to the display unit; acquiring a contact position of the received contact operation; and enlarging and displaying a display image on the display unit according to the contact position.

A program of the present invention is the program which makes a computer to execute a contact type input method performing an input operation by contacting a display unit, characterized by having the computer to execute an input reception process for receiving a contact operation to the display unit and for acquiring a contact position; and to execute an enlarge display process for enlarging and displaying a display image on the display unit according to the contact position.

A terminal device of the present invention is the terminal equipped with display means and an input device performing an input operation by contacting the display means, **characterized in that** the input device includes: input reception means for receiving a contact operation to the display means and for acquiring a contact position; and enlarge display means for enlarging a display image on the display means according to the contact position.

### BRIEF DESCRIPTION OF THE DRAWING

The above-mentioned object and an other object, a feature and an advantage will become more apparent by the following preferred embodiment and the accompanying drawings thereof.

FIG. 1 is a block diagram showing a configuration of a contact type input auxiliary device according to an embodiment 1 of the present invention.
FIG. 2 is a flow chart showing an operation of a contact type input auxiliary method according to the embodiment 1 of the present invention.
FIG 3 is a block diagram showing a configuration of input reception means according to the embodiment 1 of the present invention.
FIG. 4 is a block diagram showing a configuration of a contact type input auxiliary device according to an embodiment 2 of the present invention.
FIG 5 is a flow chart showing an operation of the contact type input auxiliary method according to the embodiment 2 of the present invention.
FIG. 6 is a block diagram showing a configuration of operation judgment means according to the embodiment 2 of the present invention.
FIG. 7 is a flow chart showing an operation of the operation judgment means according to the embodiment 2 of the present invention.
FIG. 8 is a block diagram showing the configuration of enlarge display means according to the embodiment 2 of the present invention.
FIG. 9 is a flow chart showing an enlarge display process according to the embodiment 2 of the present invention.
FIG. 10 is a flow chart showing an operation for closing an enlarged display image according to the embodiment 2 of the present invention.
FIG. 11 shows a straight type mobile telephone having a touch panel input device according to an embodiment 3 of the present invention.
FIG. 12 shows a folding type mobile telephone having the touch panel input device according to the embodiment 3 of the present invention.
FIG. 13 shows a specific example of a display screen according to the embodiment 3 of the present invention.
FIG. 14 shows a specific example of the display screen, in which a part of an image is enlarged, according to the embodiment 3 of the present information.
FIG. 15 shows a state of a user grasping a mobile telephone by the left hand according to the embodiment 3 of the present invention.
FIG. 16 shows a specific example of an operation by the user for closing a detailed window by the left hand according to the embodiment 3 of the present invention.
FIG. 17 shows a state of the user grasping the mobile telephone by the right hand according to the embodiment 3 of the present invention.
FIG. 18 shows a specific example of an operation by the user for closing a detailed window by the right hand according to the embodiment 3 of the present invention.

### BEST MODE FOR CARRYING OUT THE INVENTION

Next, an embodiment 1 for carrying out the present invention will be described in detail by referring to the figures.

### (Embodiment 1)

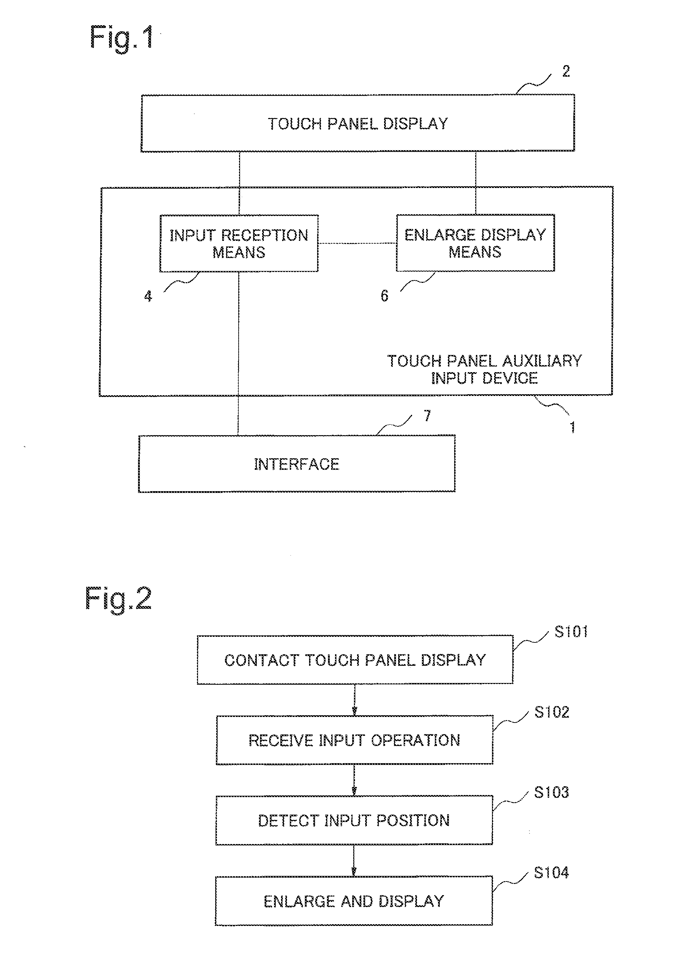

FIG. 1 shows an example of a contact type input device according to this embodiment.

The contact type input device, for example, includes input reception means 4 and enlarge display means 6, which are connected to a touch panel display 2. The input reception means 4 is connected to the enlarge display means 6, and connected to the touch panel display 2. The input reception means 4 is further connected to an interface 7 of an information terminal device, which is not illustrated.

Each means may be a part of dedicated parts including exclusively designed semiconductor circuit, or may be a function implemented by a CPU of a terminal main body.

Referring to FIG. 2, an operation of the contact type input device is shown.

A user contacts the touch panel display 2, to perform an input operation (S101).

The input reception means 4 receives a contact operation by the user (S102) and acquires coordinate information of a contact position (S103). The coordinate information is inputted to the interface 7.

The enlarge display means 6, based on the coordinate information of the contact position, enlarges and displays image information on the touch panel display 2 (S104).

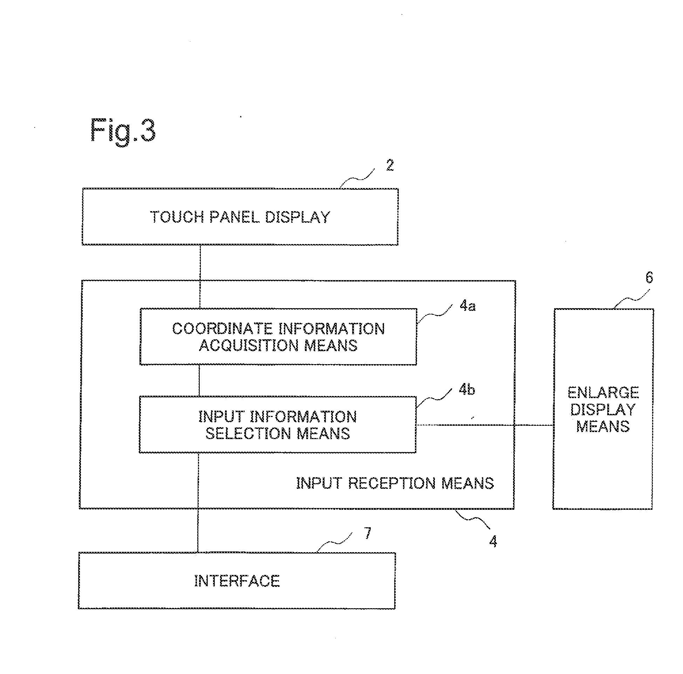

FIG. 3 shows an example of the input reception means 4 according to this embodiment.

The input reception means 4 includes coordinate information acquisition means 4a and input information selection means 4b.

By contacting the touch panel display 2, the coordinate information acquisition means 4a calculates the coordinate information of the contact position on the touch panel display 2, and sends the coordinate information to the input information selection means 4b.

The input method selection means 4b, from the interface 7, obtains state information regarding processing of a screen. In other words, when the contact operation to the touch panel display 2 is to instruct enlarging the screen, the coordinate information of the contact position is sent to the enlarge display means 6 and the interface 7. When the contact operation is not to instruct enlarging the screen, the coordinate information of the contact operation is not sent to the enlarge display means 6 but is sent to the interface 7.

As a result, without especially needing an auxiliary input means such as a stylus pen, enlarging the display screen can be easily performed.

### (Embodiment 2)

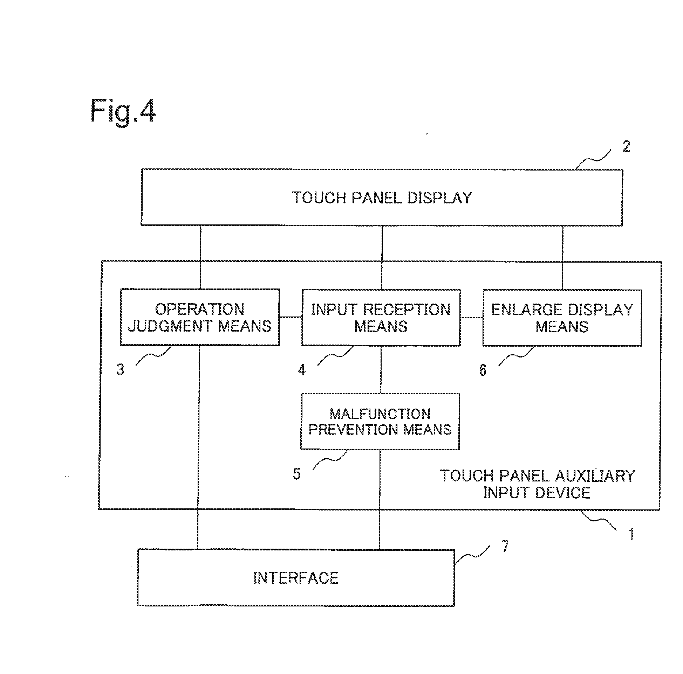

FIG. 4 shows an example of a contact type input device in a second embodiment.

The contact type input device according to this embodiment is constructed by adding operation judgment means 3 and malfunction prevention means 5 to the above mentioned contact type input device according to the first embodiment. The operation judgment means 3 is connected to the touch panel display 2. An input reception means 4 mutually connects the operation judgment means 3 and the enlarge display means 6. The input reception means 4 is, further connected to the interface 7 of an information terminal device, which is not illustrated, via the malfunction prevention means 5. The operation judgment means 3 is connected to the interface 7.

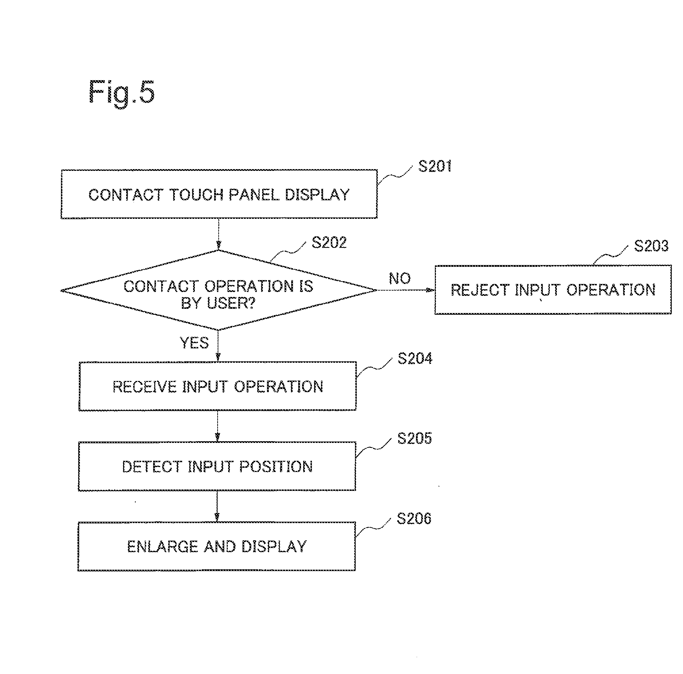

Referring to FIG. 5, the operation of the contact type input device according to this embodiment is shown.

The user contacts the touch panel display 2, to perform an input operation (S201).

The operation judgment means 3 judges whether the contact on the touch panel display 2 is a contact operation by the user or not. In other words, the touch panel display 2 is provided with an external sensor, and when the touch panel display 2 is contacted, it detects a user's operation to the sensor such as light intercepting. When the user performs the contact operation in order to contact the touch panel display 2, an operation to the sensor such as light intercepting is elected to be performed simultaneously. Thus, whether the contact of the touch panel display 2 is performed by the user, or something unintentionally contacted on the touch panel display 2, is judged.

The malfunction prevention means 5 blocks an input of the contact operation to the interface 7, when it is judged by the operation judgment means 3 that the contact operation is not performed by the user (S203).

When it is judged by the operation judgment means 3 that the contact operation is performed by the user, the input reception means 4 receives the contact operation by the user (S204), and acquires coordinate information of a contact position (S205). The coordinate information is inputted to the interlace 7.

Based on the coordinate information of the contact position, the enlarge display means 6 enlarges display information on the touch panel display 2 (S206).

As presented above, when the screen is contacted not by the user, displaying the enlarged screen is prevented and an efficient browse operation becomes possible.

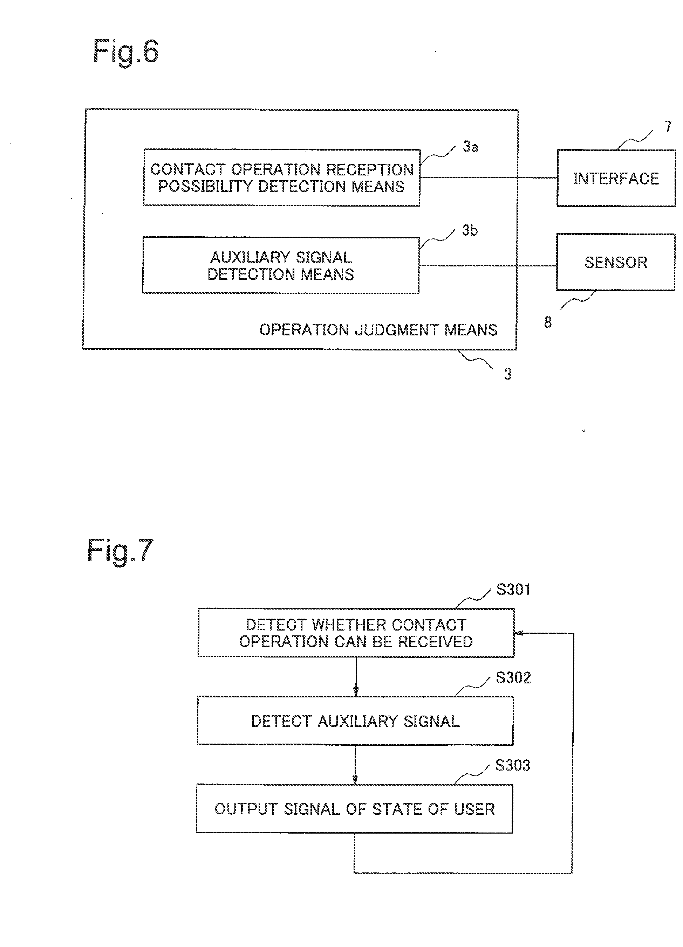

FIG. 6 shows an example of the operation judgment means 3 according to this embodiment.

The operation judgment means 3 includes contact operation reception possibility detection means 3a and auxiliary signal detection means 3b.

The contact operation reception possibility detection means 3 a is connected to the interface 7 and is controlled from the interface 7. The sensor is connected to the auxiliary signal detection means 3b.

Referring to FIG 7, the operation of the operation judgment means 3 is explained.

The contact operation reception possibility detection means 3a judges whether the touch panel display 2 is in a state, in which a contact operation can be received, and a signal can be outputted (S301).

When an information processing terminal is in a stage of inputting the signal from the touch panel display 2, the interface 7 sends a instruction to the contact operation reception possibility detection means 3a an instruction indicating a state, in which a contact operation reception is possible.

The auxiliary signal detection means 3b detects the state of the user, who is operating the touch panel input device 1. (S302)

The operation judgment means 3 judges, based on the detection result of then contact operation reception possibility detection means 3a and the detection result of the auxiliary signal detection means 3b, whether or not the enlarged screen is opened or closed by the user contacting the touch panel display 2 so as to see the screen. By the judgment result, a signal indicating a state of the user is outputted. (S303)

After the signal indicating the state of the user is outputted, the process returns to S301, and it is judged whether or not it is in a state in which the contact operation can be received, then the state according to the user's operation is detected. By repeating the process hereof, the state of the user is checked periodically. When the state of the user changes, it is responded to it immediately.

The signal detected by the auxiliary signal detection means 3b, for example, is the signal from the connected sensor.

The sensor, for example, is an optical sensor or the like. Furthermore, the sensor may be a touch sensor. Moreover, the sensor may be a sensor of static electricity. The state, in which the user intercepts light of the sensor by a finger or the like, is detected and whether or not the user is operating the touch panel display 2 is judged.

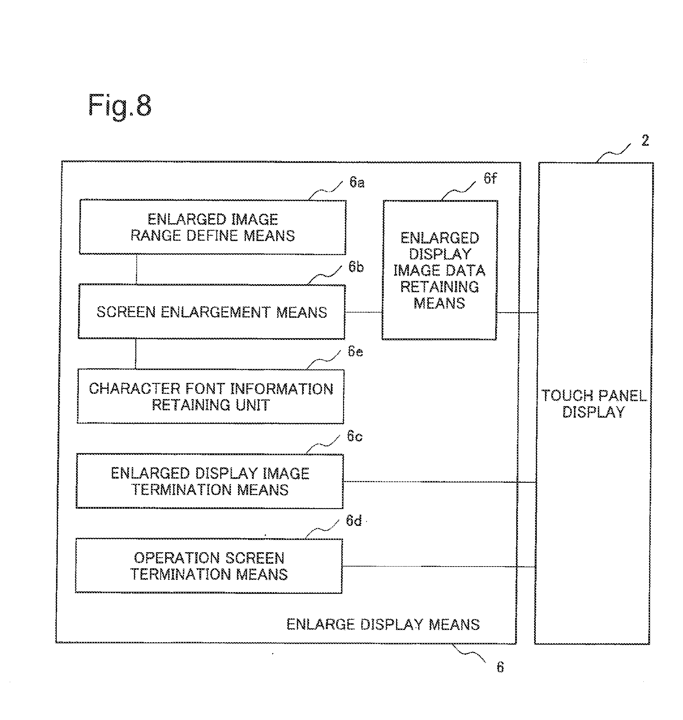

FIG. 8 shows an example of the enlarge display means 6 according to this embodiment.

The enlarge display means 6 includes enlarged range define means 6a, and screen enlargement means 6b, which is connected thereof. Further, enlarged display image termination means 6c and operation screen termination means 6d are included. Moreover, in the screen enlargement means 6b, a character font information retaining unit 6e may be included. Screen data to be enlarged and displayed, which are generated by the screen enlargement means, is retained at enlarged display image data retaining means 6f. The enlarge display means 6 is connected to the input reception means 4.

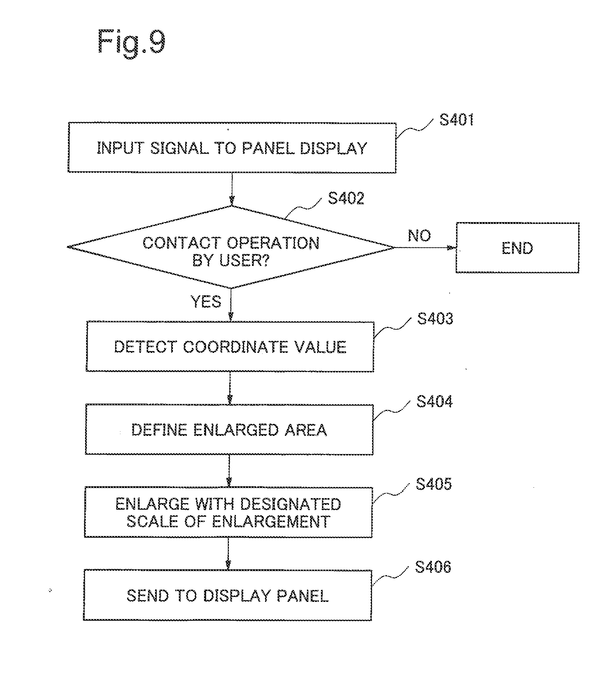

Referring to FIG. 9, a process of enlarging the screen will be explained.

When it is judged by the operation judgment means 3 whether it is in the state in which the user opens or closes the enlarged screen to look at the screen (S402), and when the signal is inputted through the contact on the touch panel display 2 (S401), the input reception means 4 detects a coordinate value of the contact location on the touch panel display 2 (S403). In other words, an input signal from the touch panel display 2 includes information on the coordinate on the screen, and the input reception means 4 sends the information on the coordinate hereof to the enlarge display means. The enlarged range define means defines an area of a predetermined size focused on the detected coordinate on the screen (S404). The predetermined size may be determined appropriately according to the scale of the enlargement. Further, when the contact location is near the periphery of the display area of the screen, and a part of the area of the predetermined size focused on the coordinate goes out of the display screen, a center position may be moved appropriately, so that the area of the predetermined size is included in the display screen.

The defined area is enlarged by the designated scale of enlargement (S405).

Further, the enlarged screen has a close button that closes the enlarged image by the user's operation.

The enlarged image may be generated by enlarging an the area of the predetermined size of the display screen to the designated scale of enlargement complementing a bit appropriately, and a character font may be replaced by character font information extracted from a character font information retaining unit. Data of the enlarged area is sent to the touch panel display 2 (S406).

When repeating the operation mentioned above a plural times, the enlarged display is repeated. In other words, when the user further performs a contact operation on the screen with enlarged display, a screen further enlarged will be displayed.

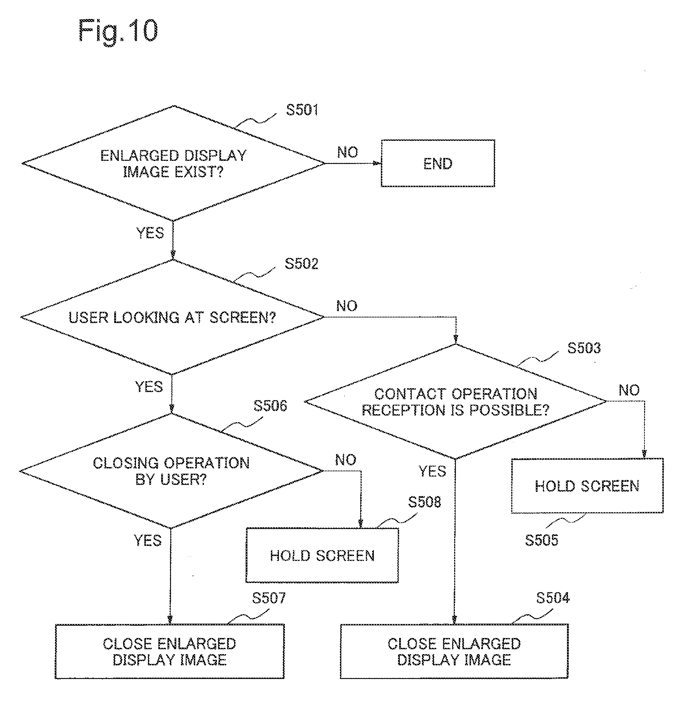

Referring to FIG 10, a process of closing the enlarged screen will be explained.

When the enlarged image has already been displayed by the user's operation (S501), it is judged by an output of the operation judgment means, whether the user is maintaining the state of looking at the screen by opening or closing the enlarged screen or no longer in the state of looking (S502). For example, the sensor 8 detects that the user does not continue the operation of the information processing terminal, and then, transition hereof is judged.

Or more specifically, when the state, in which the contact operation reception is possible, transits to the state, in which the contact operation reception is not possible (S503), the enlarged image is retained (S505). Or more specifically, by the processing content, it may be closed.

When the state of the contact operation reception being possible is not changed, it is judged that the user is not continuing the operation, and the enlarged display image is closed (S504).

When plural enlarged images are displayed, one enlarged image may be closed, and all images may be closed at once. Or, the plural images may be closed with checking the display of a dialogue.

When the state of the user looking at the screen is not changed, the user can perform an operation for closing the enlarged image (S506), to close the enlarged image (S507). The closed button included in the enlarged image is operated, and then, the operation image termination means 6d closes the enlarged image.

When the user does not perform the operation for closing the enlarged image, the enlarged image is retained.

A return button (not illustrated) may be provided with, which displays the screen closed by the user again, after closing the enlarged image, before proceeding to the next operation. The return button hereof is displayed on the display screen after the enlarged display image is closed, and disappears when proceeding to the next operation. When the return button is contacted, the display data of enlarged display image, stored in the enlarged display image data means 6f, is displayed again on the touch panel display 2. When the return button is not contacted and proceeds to the next operation, the enlarged display image stored in the enlarged display image data means 6f is freed.

As a result, when the enlarged display screen has closed accidentally though the user is looking at the enlarged image, it can be displayed again through an easy operation.

### (Embodiment 3)

### (1) A Cellular Phone Having a Touch Panel Input Device

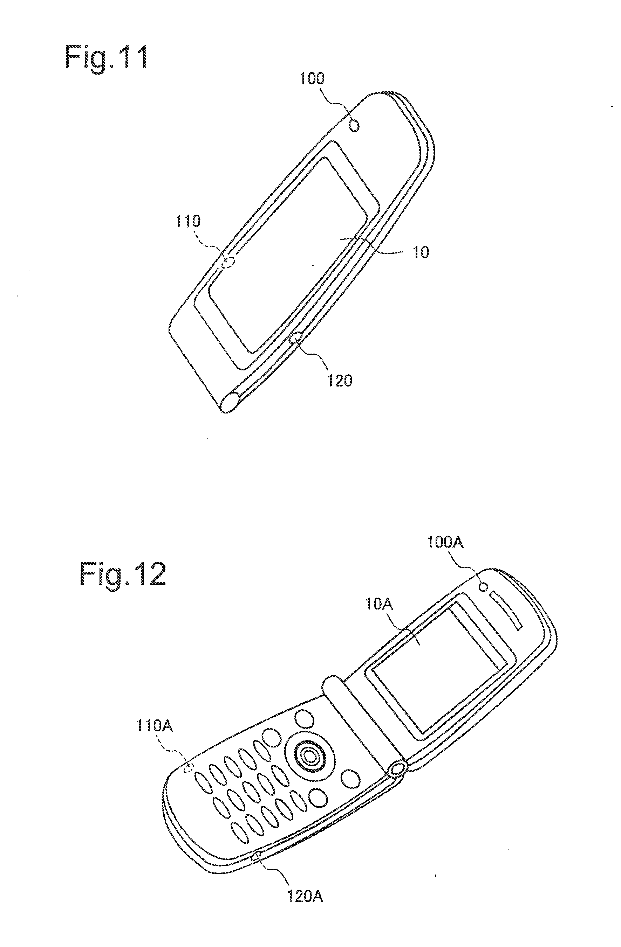

FIG. 11 shows a cellular phone having a touch panel input device as an embodiment of the present invention.

A cellular phone shown in FIG. 11 includes a touch panel display 10 which can display an image, a sensor 100 provided in the upper part of the display 10 and sensors 110 and 120 provided on the side of the cellular phone.

Though sensors 100, 110 and 120 are preferably optical sensors, the present embodiment is not limited thereof. For example, on the side of the cellular phone a static electricity sensor may be used.

Further, although FIG. 11 shows a cellular phone of a straight type, in this embodiment, it is not limited to the cellular phone of the straight type, and it may be a cellular phone of a folding type.

An example of the cellular phone of the folding type thereof is shown in FIG. 12.

The cellular phone of the folding type shown in FIG. 12 includes a touch panel display 10A which can display an image, a sensor I 100A provided in the upper part of the display 10A and sensors 110A and 120A provided on the side of the cellular phone.

The basic configurations of the cellular phone of the straight type of FIG. 11 and of the cellular phone of the folding type in FIG. 12 are the same. Therefore, hereinafter, it will be explained using the cellular phone of the folding type shown in FIG 12.

### (2) An Operation of the Cellular Phone Having a Touch Panel Input Device

Next, an operation of the cellular phone shown in FIG. 12 is explained.

The cellular phone shown in FIG. 12, for example, displays a browser page on a touch panel display 10A.

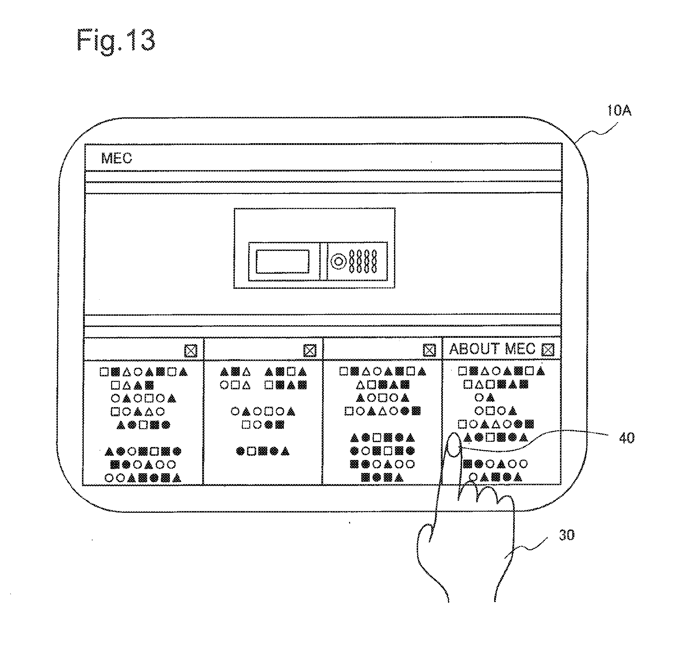

A specific example of a display screen displayed on the touch panel display 10A is shown in FIG. 13.

FIG. 13 shows a screen displayed when a certain Web site is browsed.

Referring to FIG. 13, on the touch panel display 10A, page information of then certain Web site is displayed. When the touch panel display 10A thereof displays all contents, characters displayed on the browser becomes small, and the reading of the characters is difficult.

Accordingly, a user selects a part 40 intended to display in detail from the screen displayed on the touch panel display 10A, then touches the part using a finger 30 of the user.

By the user's contact operation, the neighborhood of the part 40 touched by the user on the touch panel display 10A is enlarged and displayed.

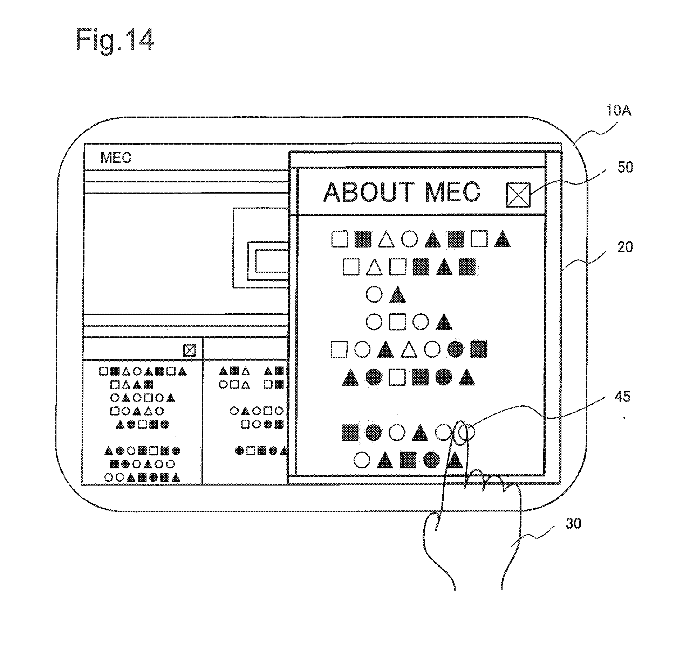

The specific example of the display screen hereof is shown in FIG 14.

In the example shown in FIG. 14, the touch panel display 10A defines an area of the neighborhood of the part 40 contacted by the user. The area hereof is enlarged and displayed by a screen display newly generated as a detailed window 20.

As a result, the user can read the small characters in FIG. 13 that could not be read, by the enlarged display as shown in FIG. 14.

Furthermore, the cellular phone hereof, when further detailed contents of the detailed window 20 is to be checked, can further enlarges and displays a selected a part 45 to be displayed in detail by using the user's finger 30 again.

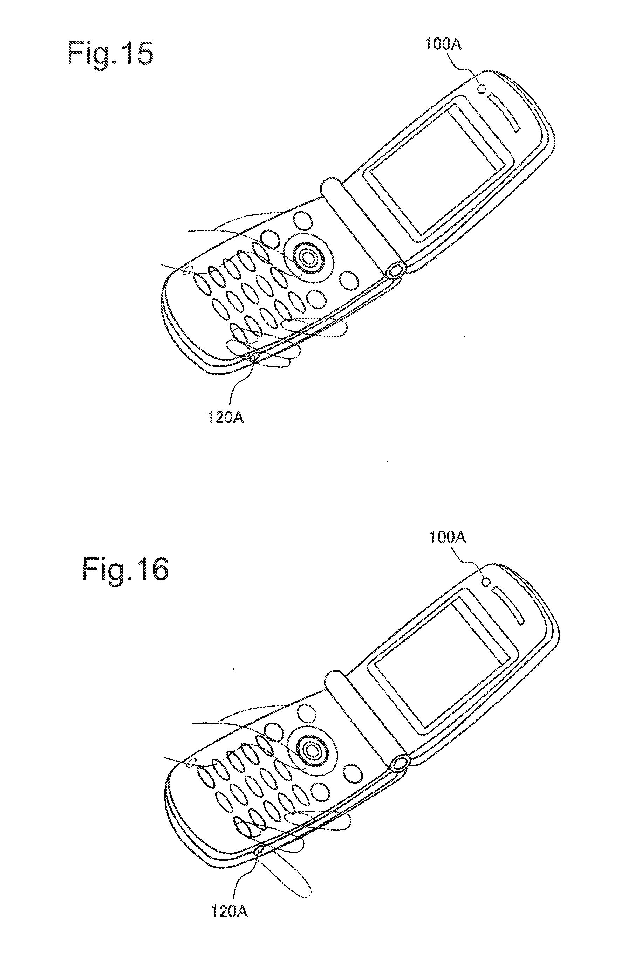

Now, FIG. 15 shows the state of the user grasping the Cellular phone by a left hand, when the above mentioned operation is being performed.

In addition, the left hand shown in FIG. 15 holds the optical sensor part of a sensor 120A (FIG. 15) so as to intercept light by the little finger.

Further, the cellular phone hereof works during the sensor 100A (FIG. 15) receives light.

Then, in the state of FIG. 15, when closing the detailed window 20 shown in FIG. 14, the user performs contact operation to a close button 50 in FIG 14. By the contact operation hereof, the user can close the detailed window 20.

Moreover, in the present embodiment, as shown in FIG. 16, by moving the little finger of the user away from the sensor 120A, which is positioned at the little finger of the left hand, the enlarged detailed window 20 can be closed. By the operation hereof, it returns to the state of FIG. 13.

In addition, in the present embodiment, although the detailed window 20 is closed using the sensor 120A located at the left hand of the user, the present embodiment is not limited hereof, the detailed window 20 may be closed by using the right hand of the user.

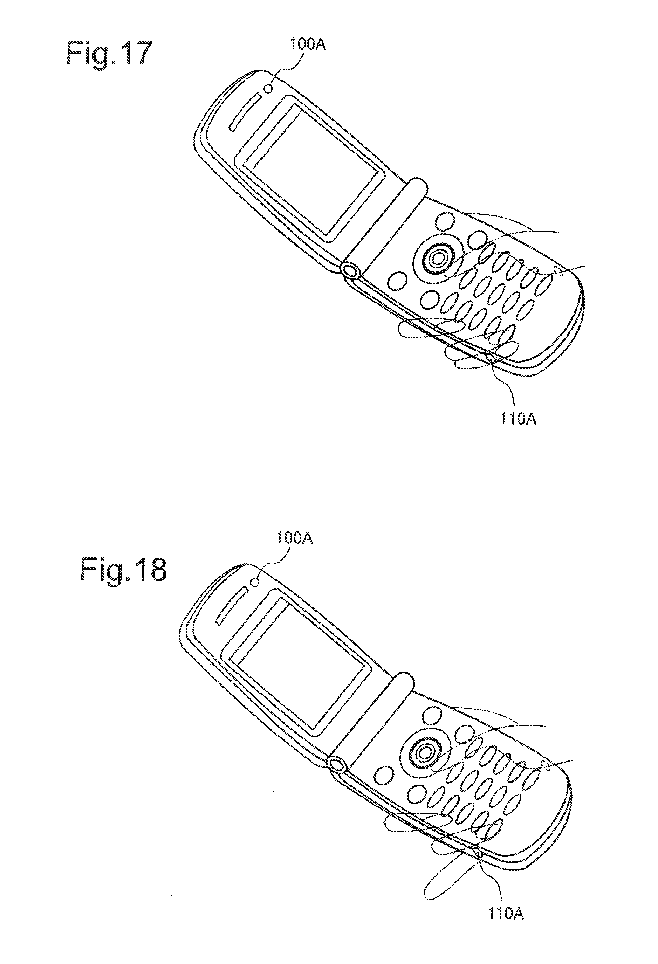

For example, the embodiment of the user grasping the cellular phone by a right hand is shown in FIG 17.

Then, the user, from the state of FIG. 17 to as in FIG. 18, by moving the little finger of the user away from the sensor 110A which is positioned at the little fmger of the right hand, the enlarged detailed window 20 can be closed and can be returned to the state of FIG. 13.

As shown above, in case of closing the detailed window 20 using the optical sensor, when the sensor 100A is in the state of sensing light, either the sensor 110A or the sensor 120A, in which light was intercepted, senses light, the detailed window 20 is closed.

### (3) The Effect of the Cellular Phone Having a Touch Panel Input Device

According to the present embodiment, the touch panel input device can browse a Web page in detail without a stylus pen by enlarging a part intended to be displayed in detail by the detailed window 20.

Further, since it is possible to enlarge a part intended to be displayed in detail only by a finger of a user, the user can browse in detail correctly and easily.

Moreover, by using a sensor, an input of the touch panel display 10A may be received, only when the sensor 100A of the touch panel display 10A receives light and the sensor 110A and the sensor 120A do not receive light.

When the sensor 100A does not receive light, the cellular phone hereof does not work. As a result, malfunction is prevented.

Further, when the sensor 100A receives light and the sensors 110A or 120A receives light, the detailed window is closed, therefore the touch panel display 10A can be easily operated. As a result, malfunction in a bag or malfunction such as by dropping is prevented.

### (4) The Other Embodiment

Although the embodiment 3 illustrates a cellular phone having a touch panel input device, the present embodiment is not limited to the same. For example, it can be applied to a car navigation system, a gaming machine and the like.

Specifically, input device applied to car navigation system, for example, enlarges and displays a map, in which a detailed direction is to be confirmed and during a user is operating the car navigation system, starting of an automobile is rejected.

In addition, in the embodiment 3, although the sensor 100A, the sensor 110A and the sensor 120A are the operation judgment means and the malfunction prevention means, and the touch panel display 10A is the input reception means and the enlarge display means, the present embodiment is not limited to the same, and it may be realized by other configuration.

According to the present invention, a contact type input device, by enlarging a screen displayed on a display screen based on a position of the contact operation, displays a detailed screen on the display screen. As a result, an accurate input operation of the touch panel is possible.

As a result, without using a stylus pen, a contact type input device and a contact type input method which can easily enlarge a display screen can be realized.

This application claims priority from Japanese Patent Application No. 2007-210842, filed on Aug. 13, 2007, the contents of which are incorporation herein by reference in their entirety.

While having described an invention of the present application referring to the embodiments, the invention of the present application is not limited to the above mentioned embodiments. It is to be understood that to the configurations and details of the invention of the present application, various changes can be made within the scope of the invention of the present application by those skilled in the art.

## Claims

1. A contact type input device performing an input operation by contacting display means, **characterized by** comprising:
input reception means for receiving a contact operation to said display means and for acquiring a contact position; and
enlarge display means for enlarging and displaying a display image on said display means based on said contact position.

2. The contact type input device according to claim 1, **characterized by** further comprising:
operation judgment means for judging whether or not said contact operation to said display means is a contact operation by a user; and
malfunction prevention means for rejecting said input operation, when said contact operation is judged as a contact operation not by said user by said operation judgment means, wherein
said input reception means receives said input operation when said contact operation is judged as the contact operation by said user by said operation judgment means.

3. The contact type input device according to claim 1 or 2, **characterized in that**
said enlarge display means, based on the contact position acquired by said input reception means by contacting said enlarged display image, further enlarges and displays said enlarged display image.

4. The contact type input device according to any one of claims 1 to 3, **characterized by** further comprising:
sensor, wherein
said operation judgment means, includes:
first judgment means for judging whether or not said display means can receive said contact operation by said user; and
second judgment means for judging a state of said user based on a result of detection by said sensor.

5. The contact type input device according to any one of claims 1 to 4, **characterized in that**
said enlarge display means includes an enlarged display image termination means for closing an enlarged display image when said enlarged display image is present and it is judged by said operation judgment means that a state of said user is changed from a first state to a second state.

6. The contact type input device according to any one of claims 1 to 5, **characterized by** further comprising:
operation display termination means for closing said enlarged display image by an operation of said user.

7. The contact type input device according to claim 4, **characterized in that**
said sensor is an optical sensor, and
said second judgment means detects light interception of said optical sensor and judges a state of said user.

8. A contact type input method that performs an input operation by contacting a display screen, **characterized by** comprising:
receiving a contact operation to said display screen;
acquiring a contact position of the received contact operation; and
enlarging and displaying a display image on said display screen based on said contact position.

9. The contact type input method according to claim 8, **characterized by** comprising:
judging whether or not said contact operation to said display screen is a contact operation by a user;
rejecting said input operation, when said contact operation is judged as a contact operation not by said user; and
receiving said input operation when said contact operation is judged as the contact operation by said user.

10. The contact type input method according to claim 8 or 9, **characterized by** comprising:
further enlarging and displaying said enlarged display image based on the contact position received by contacting said enlarged display image.

11. The contact type input method according to any one of claims 8 to 10, **characterized by** comprising:
judging whether or not said display screen can receive said contact operation by said user; and
judging a state of said user based on a result detected by a sensor.

12. The contact type input method according to any one of claims 8 to 11, **characterized by** comprising:
closing an enlarged display image, when said enlarge display screen is present and it is judged that a state of said user is changed from a first state to a second state.

13. The contact type input method according to any one of claims 8 to 12, **characterized by** comprising:
closing said enlarged display screen by an operation of said user.

14. The contact type input method according to claim 11, **characterized in that**
said sensor is an optical sensor, and comprising:
detecting light interception of said sensor and judging a state of said user.

15. A program for a computer to execute a contact type input method performing an input operation by contacting a display screen, **characterized by** executing with a computer executing:
an input reception process for receiving a contact operation to said display screen and for acquiring a contact position; and
an enlarge display process for enlarging and displaying a display image on said display screen based on said contact position.

16. The program according to claim 15, **characterized by** executing with a computer for executing:
an operation judgment process for judging whether or not said contact operation to said display screen is a contact operation by a user;
a malfunction prevention process for rejecting said input operation, when said contact operation is judged as a contact operation not by said user; and
an input reception process for receiving said input operation of said user, when said contact operation is judged as the contact operation by said user.

17. The program according to claim 15 or 16, **characterized by** executing with a computer for executing:
a process for further enlarging and displaying said enlarged display image based on a contact position received by contacting said enlarged display image.

18. The program according to any one of claims 15 to 17, **characterized by** executing with a computer for executing:
a first judging process for judging whether or not said display screen can receive a contact operation by said user; and
a second judging process for judging a state of said user based on a result detected by a sensor.

19. The program according to any one of claims 15 to 18, **characterized by** executing with a computer for executing:
a process for closing an enlarged display image, when said enlarged display screen is present and it is judged that a state of said user is changed from a first state to a second state.

20. The program according to any one of claims 15 to 19, **characterized by** executing with a computer for executing:
a process for closing said enlarged display screen by an operation of said user.

21. The program according to claim 18, **characterized in that**
said sensor is an optical sensor, and comprising
judging a state of said user by detecting light interception of said optical sensor.

22. A terminal including display means and an input device performing an input operation by contacting said display means, **characterized in that**
said input device comprises:
input reception means for receiving a contact operation to said display means and for acquiring a contact position; and
enlarge display means for enlarging and displaying a display image on said display means based on said contact position.
